Europäisches Patentamt

European Patent Office

Office européen des brevets

(11) Numéro de publication : **0 442 792 B1**

# (12) FASCICULE DE BREVET EUROPEEN

(45) Date de publication du fascicule du brevet :
**18.01.95 Bulletin 95/03**

(51) Int. Cl.⁶ : **G02F 1/295, G02F 1/225**

(21) Numéro de dépôt : **91400323.1**

(22) Date de dépôt : **11.02.91**

---

(54) **Dispositif électro-optique à guides de lumière, notamment pour séparateur de polarisations.**

---

(30) Priorité : **12.02.90 FR 9001607**

(43) Date de publication de la demande :
**21.08.91 Bulletin 91/34**

(45) Mention de la délivrance du brevet :
**18.01.95 Bulletin 95/03**

(84) Etats contractants désignés :
**CH DE ES FR GB IT LI NL SE**

(56) Documents cités :
**EP-A- 0 361 152**
**FR-A- 2 633 060**
**ELECTRONICS LETTERS, vol. 24, no. 9, 28**
**avril 1988, pp. 530-531 ; T. POHLMANN et al. :**
**"Ti:LiNbO3 interferometric activated X-switch**
**for high-speed applications : IAX".**
**PATENT ABSTRACTS OF JAPAN, vol. 6, no.**
**104 (P-122)[982], 15 juin 1982 ; & JP-A-57 037**
**328**

(56) Documents cités :
**APPL. PHYS. LETT., vol. 51, no. 10, 7 septem-**
**bre 1987, pp. 716-718 ; J.L. NIGHTINGALE et**
**al.: "Characterization of frequency dispersion**
**in Ti-indiffused lithium niobate optical devi-**
**ces"**
**ELECTRONICS LETTERS, vol. 24, no. 8, 14**
**avril 1988, pp. 478-479 ; S.P. SHIPLEY:**
**"All-single-mode-fibre interferometric polari-**
**sation beam splitter"**

(73) Titulaire : **ALCATEL N.V.**
**Strawinskylaan 341,**
**(World Trade Center)**
**NL-1077 XX Amsterdam (NL)**

(72) Inventeur : **Duchet, Christian**
**76 rue Alfred Dubois**
**F-91460 Marcoussis (FR)**

(74) Mandataire : **Weinmiller, Jürgen et al**
**Lennéstrasse 9**
**Postfach 24**
**D-82336 Feldafing (DE)**

EP 0 442 792 B1

## Description

La présente invention concerne un dispositif électro-optique à guides de lumière pouvant être réalisé sous forme intégrée sur un substrat cristallin. Un tel dispositif possède typiquement trois bornes optiques constituant une entrée et deux sorties. Une vibration lumineuse arrivant sur cette entrée est dirigée vers l'une ou l'autre de ces sorties selon sa direction de polarisation et les valeurs de tensions électriques de commande appliquées aux guides formés dans le substrat.

Le dispositif peut ainsi constituer un séparateur de polarisation pour une lumière d'entrée composée de deux vibrations de polarisations linéaires mutuellement perpendiculaires : Les tensions de commande étant maintenues constantes les deux vibrations sont séparées et dirigées respectivement vers les deux sorties.

Il peut aussi constituer un commutateur pour une lumière d'entrée comportant une seule de ces vibrations : Cette lumière est dirigée vers l'une ou l'autre des deux sorties selon la valeur des tensions de commande.

Dans de tels dispositifs il est souhaitable que les tensions de commande nécessaires restent de valeur limitées.

Un premier dispositif connu a été proposé pour constituer un tel commutateur. Il a été décrit par T.POHLMANN, A. NEYER, E. VOGES, dans l'article intitulé "Ti : LiNbO$_3$ interferometric activated X - switch for high-speed application : IAX" dans la revue Electronics Letters, Vol 24, n° 9, pages 530-531 du 28 Avril 1988. Ce dispositif connu comporte des guides optiques perpendiculaires à l'axe cristallographique Z qui est l'axe optique unique du substrat cristallin sur lequel ces guides sont réalisés. Son utilisation en séparateur de polarisations nécessiterait l'emploi de tensions de commande élevées et des conditions de fabrication très strictes pour obtenir un coupleur en X indépendant de la polarisation.

Par ailleurs un deuxième circuit est connu pour constituer un séparateur de polarisations. Il a été décrit par Y.BOURBIN, dans l'article intitulé "Polarization splitter in integrated optics" présenté à la "5th European Conference on Integrated Optics ECIO 89", les 24-28 avril 89 à Paris. Il utilise un coupleur directif actif dont l'excitation optique est symétrique et où les polarisations orthogonales (mode TE et TM) voient des variations d'indice égales et opposées dues à des coefficients électro-optiques égaux et opposés. L'utilisation d'un coupleur directif actif impose une adaptation mutuelle des parties optiques et la partie électrique : Les dimensions du coupleur (longueur, distance entre guides) imposent les dimensions des électrodes (longueur, distance entre électrodes). Une diminution des tensions de commande peut être obtenue, comme dans d'autres dispositifs, par une augmentation de la longueur des électrodes. Mais l'utilisation d'un coupleur directif impose alors une augmentation de la distance entre les électrodes et cette augmentation de distance s'oppose à une diminution des tensions de commande. Ces dernières ne peuvent donc être diminuées que dans une faible mesure à la suite d'une augmentation de la longueur . Cette dernière se fait par ailleurs au détriment de la bande passante optique qui diminue lorsque la longueur augmente.

La présente invention a notamment pour but de réaliser de manière simple un dispositif électro-optique à guides de lumière pouvant être utilisé avec des tensions de commande limitées pour divers états de polarisation d'une onde lumineuse d'entrée.

Elle a notamment pour objet un dispositif de ce genre comportant un ensemble de déphasage comportant lui-même une paire de guides formés dans un substrat cristallin pour réaliser un déphasage électro-optique de 90 degrés, et suivi d'un coupleur à demi-puissances, ce dispositif étant caractérisé par le fait que ladite paire de guides est constituée de deux guides parallèles à l'axe optique unique de ce substrat de manière que deux vibrations lumineuses de polarisations perpendiculaires voient deux coefficients électro-optiques de même valeur absolue et de signes algébriques opposés.

A l'aide des figures schématiques ci-jointes, on va décrire ci-après comment la présente invention peut être mise en oeuvre, étant entendu que les éléments et dispositions mentionnés et représentés ne le sont qu'à titre d'exemples non limitatifs. Lorsqu'un même élément est représenté sur plusieurs figures il y est désigné par le même signe de référence.

La figure 1 représente une vue en perspective du substrat cristallin portant les guides optiques d'un premier dispositif selon la présente invention.

La figure 2 représente une vue en perspective de ce premier dispositif.

La figure 3 représente une vue en coupe transversale de ce premier dispositif.

La figure 4 représente une vue en perspective d'un deuxième dispositif selon la présente invention.

La figure 5 représente une vue en coupe transversale de ce deuxième dispositif.

La figure 6 représente une vue en coupe transversale d'un troisième dispositif selon la présente invention.

La figure 7 représente une vue en coupe transversale d'un quatrième dispositif selon la présente invention.

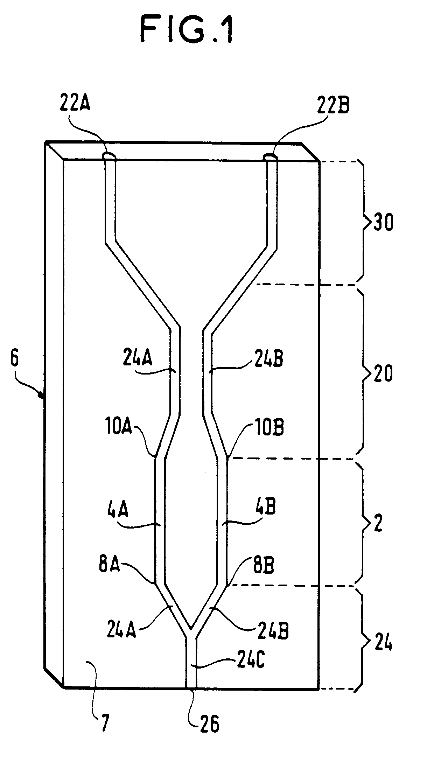

On va tout d'abord, à l'aide des figures 1 à 3, indiquer de manière générale diverses dispositions qui sont préférées selon la présente invention, au moins dans certaines applications, et qui sont adoptées dans les quatre dispositifs donnés en exemple. Certaines de ces dispositions sont communes à ces dispositifs selon l'in-

2

vention et au premier dispositif connu précédemment mentionné, alors que d'autres sont propres à la présente invention.

Selon des dispositions communes, le dispositif comporte un ensemble de déphasage comportant lui-même :

- Un premier et un deuxième guides de déphasage 4A et 4B. Ce sont deux guides de lumière formés dans un substrat cristallin 6. Ce dernier présente trois axes cristallographiques X, Y, Z et un axe optique unique Z. Il donne lieu à des interactions entre une lumière se propageant dans ce substrat et un champ électique appliqué par ailleurs à ce substrat. Ces interactions sont caractérisées par des coefficients électro-optiques dépendant de la direction du champ électrique appliqué et de la direction de polarisation de la lumière par rapport aux axes cristallographiques du substrat. Ces guides présentent une première et une deuxième entrées de déphasage 8A et 8B pour recevoir deux vibrations lumineuses. Ces dernières présentent des polarisations selon un même mode transversal électrique ou transversal magnétique et des fréquences, amplitudes et phases égales, de sorte qu'elles constituent une première et une deuxième moitiés d'une même vibration polarisée. Ces guides s'étendent parallèlement l'un à l'autre sur une même longueur pour guider ces première et deuxième moitiés de vibration jusqu'à une première et une deuxième sorties de déphasage 10A et 10B, respectivement.
- Des électrodes 12, 14, 16 pour recevoir une tension de commande et appliquer en réponse aux deux guides de déphasage 4A et 4B deux champs électriques d'interaction qui sont parallèles à un même axe d'interaction électro-optique Y perpendiculaire à ces guides et qui sont orientés dans deux sens opposés.
- Et un générateur électrique 18 pour fournir ladite tension de commande.

La valeur de cette tension de commande est choisie en tenant compte de la longueur des guides de déphasage et des coefficients électro-optiques du substrat pour la direction de polarisation de la vibration polarisée reçue et pour ladite direction d'interaction. La valeur choisie est celle qui provoque un déphasage "électro-optique" de 90 degrés entre les première et deuxième moitiés de vibrations sur les première et deuxième sorties de déphasage 10A et 10B, respectivement.

Le dispositif comporte encore un coupleur passif symétrique 20 de type bien connu, indépendant de la polarisation, et comportant lui même :

- Une première et une deuxième entrées de couplage qui sont constituées respectivement par les première et deuxième sorties de déphasage 10A et 10B mais qui pourraient en être distinctes pourvu qu'elles soient raccordées optiquement à celles-ci de manière symétrique.
- Une première et une deuxième sorties de coupleur 22A et 22B.
- Et des guides de lumière 24A, 24B reliant les deux entrées 10A et 10B aux deux sorties 22A et 22B et mutuellement couplés de manière à faire interférer sur chacune de ces deux sorties de coupleur, à demi-puissances, les lumières reçues sur ces première et deuxième entrées. Ce coupleur affecte d'une part, sur sa première sortie 22A, la lumière provenant de sa deuxième entrée 10B d'un déphasage de couplage de 90 degrés par rapport à celle provenant de sa première entrée 10A. Il affecte d'autre part, sur sa deuxième sortie 22B, la lumière provenant de sa première entrée 10A, du même dit déphasage de couplage par rapport à celle provenant de sa deuxième entrée 10B.

Le coupleur ainsi constitué est du type dit "coupleur directif". Il pourrait cependant être d'un autre type tel que celui dit "coupleur en X".

Ces dispositions communes ont pour effet que lesdits déphasages électro-optique et de couplage se compensent et que les deux dites moitiés de vibration se présentent en accord de phase pour s'additionner sur l'une de ces sorties de coupleur 22A. Cette sortie constitue ainsi une sortie ouverte du dispositif pour ladite vibration polarisée. Ces mêmes déphasages s'additionnent et les deux dites moitiés de vibration se présentent en opposition de phase pour s'annihiler mutuellement sur l'autre de ces sorties de coupleur 22B. Cette autre sortie constitue une sortie fermée du dispositif pour cette même vibration polarisée.

Une autre dite disposition préférée est propre à la présente invention.

Selon cette disposition propre lesdits guides de déphasage 4A, 4B s'étendent parallèlement à l'axe optique unique Z dudit substrat cristallin 6, ladite direction d'interaction Y étant perpendiculaire à cet axe optique et telle que les coefficients électro-optiques $r_{12}$ et $r_{22}$ de ce substrat pour des polarisations de lumière parallèle et perpendiculaire à cet axe d'interaction soient égaux en valeur absolue et opposés en signe algébrique.

Cette disposition propre a un effet avantageux notamment dans deux cas. Dans un premier cas le dispositif est utilisé pour constituer un commutateur qui dirige ladite vibration polarisée vers l'une ou l'autre de ses deux sorties selon le signe algébrique dudit signal de commande. Dans ce cas cette disposition a pour effet que le commutateur ainsi constitué peut être utilisé aussi bien et dans les mêmes conditions pour diriger une vibration polarisée parallèlement audit axe d'intéraction que pour diriger une vibration polarisée perpendiculairement à cet axe. Le seul changement de fonctionnement qui accompagne ce changement de polarisation est que les rôles des deux sorties de ce commutateur sont intervertis. Dans un deuxième cas cette disposition a pour effet que le dispositif peut être facilement utilisé pour constituer un séparateur de polarisations. Dans ce deuxième cas ledit signal de commande garde une valeur et un signe constants et deux dites vibrations polarisées présentant deux polarisations perpendiculaires sont reçues ensemble sur lesdites entrées de déphasage. Ces deux vibrations sont alors séparées par ce dispositif qui les dirige respectivement vers ses deux sorties. Ces deux vibrations peuvent être deux composantes d'une même onde d'entrée.

Selon d'autres dites dispositions communes les guides de déphasage 4A et 4B et le coupleur 20 sont formés dans une même face 7 du substrat cristallin 6. Cette face est parallèle à l'axe optique Z et à un autre axe cristallographique Y de ce substrat. L'axe d'interaction Y est lui aussi parallèle à un axe cristallographique de ce substrat.

Le dispositif comporte en outre un diviseur de puissance constitué par une jonction de guides en Y 24 formée dans la face 7 du substrat cristallin 6 pour raccorder une entrée 26 du dispositif aux deux entrées de déphasage 8A et 8B. Lorsqu'une onde d'entrée est reçue sur cette entrée de dispositif elle est divisée en deux moitiés d'ondes qui ont une même puissance et qui sont reçues respectivement sur ces deux entrées de déphasage. Cette onde d'entrée peut être constituée par une dite vibration polarisée, par exemple pour réaliser une commutation si cette onde présente une polarisation convenable. Elle peut aussi comporter deux vibrations se propageant l'une selon un mode transversal électrique et l'autre selon un mode transversal magnétique, et constituant deux dites vibrations polarisées, le dispositif étant alors par exemple prévu pour réaliser une séparation de polarisation.

Dans ce dernier cas, et selon une autre dite disposition propre à la présente invention, le générateur électrique 18 fournit une tension de commande constante pour que le dispositif dirige ladite vibration se propageant selon un mode transversal électrique vers la sortie de dispositif 22B et ladite vibration se propageant selon un mode transversal magnétique vers l'autre sortie 22A.

Le dispositif ainsi réalisé en optique intégrée est fonctionnellement identique à un cube séparateur de polarisations utilisé en optique de volume mais il présente l'avantage d'utiliser des guides optiques monomodes qui sont facilement raccordables à des fibres optiques monomodes. De plus, il peut être associé à d'autres dispositifs réalisés sur le même substrat pour assurer d'autres fonctions et former un circuit plus complexe d'optique intégrée.

Parmi les nombreuses applications d'un tel dispositif séparateur on peut citer la réception à diversité de polarisation qui est utilisée pour réaliser les liaisons cohérentes.

On va maintenant décrire plus particulièrement les dispositifs donnés en exemple.

Le substrat 6 est, comme habituellement, du niobate de lithium $LiNbO_3$ qui permet de réaliser des guides optiques de bonne qualité par diffusion de titane par exemple. Plus généralement le matériau appartient aux classes de symétrie pour lesquelles les coefficients électro-optiques vérifient la relation $r_{12} = -r_{22}$ (ou la relation $r_{21} = -r_{11}$) et qui sont des milieux optiques uniaxes.

Conformément à la présente invention, l'axe optique Z est dirigé suivant la direction de propagation de la lumière qui est celle des guides de déphasage 4A et 4B et de couplage 24A et 24B.

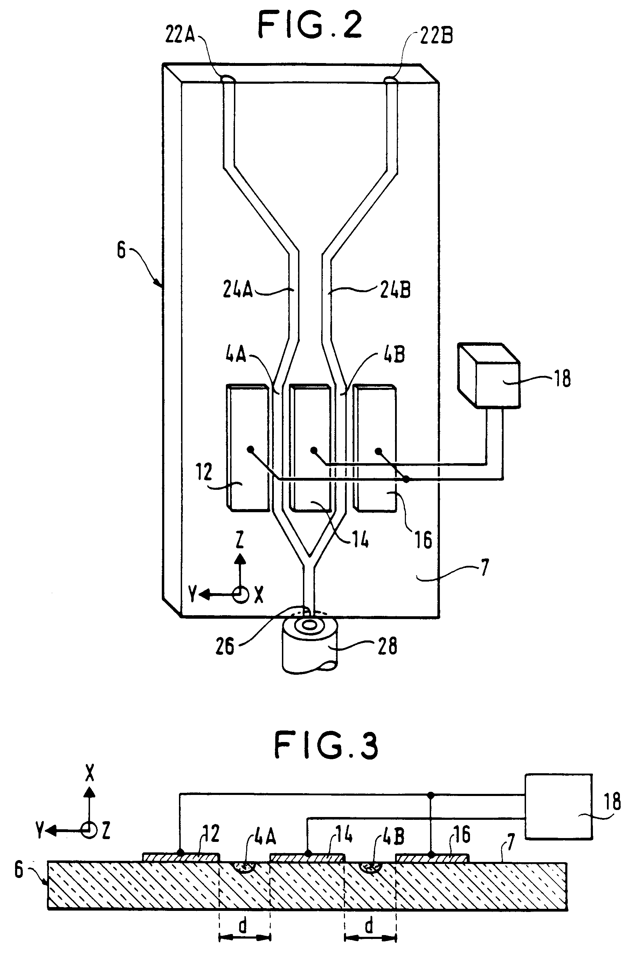

Dans le cas du dispositif de la figure 2, l'axe cristallographique X est perpendiculaire à la face supérieure 7. Un champ électrique parallèle est appliqué à ces guides de déphasage à l'aide des électrodes 12, 14, 16 situées de part et d'autre de ces guides. Dans ce cas, une polarisation, c'est-à-dire une dite vibration polarisée, (MODE TE c'est-à-dire transversal électrique) voit le coefficient électro-optique $r_{22}$ alors que la polarisation orthogonale (mode TM c'est-à-dire transversal magnétique) voit le coefficient $r_{12}$ (= $-r_{22}$).

Le circuit optique comporte cinq parties consécutives à partir de l'entrée 26 du dispositif :
- Un guide optique monomode d'entrée 24C.
- Un diviseur de puissance 24 constitué par une jonction en Y symétrique formant un angle faible (1 degré par exemple) entre ses deux bras 24A et 24B qui se raccordent aux entrées 8A et 8B.
- L'ensemble de déphasage électro-optique 2 constitué par les deux guides de déphasage 4A et 4B qui sont parallèles, identiques, de longueurs égales, et d'écartement suffisant pour éviter tout couplage optique entre eux.
- Le coupleur 20 qui est un coupleur directif symétrique 3 dB indépendant de la polarisation.
- Et les deux sorties optiques 22A et 22B dans une partie terminale 30 associée au coupleur 20.

On va maintenant décrire le fonctionnement de ce dispositif.

Après injection par une fibre optique monomode 28, une lumière cohérente constituant une dite onde d'entrée se propage dans le guide 24C. Elle se divise en deux moitiés égales dans le diviseur 24. A une abscisse A, qui est celle des entrées de déphasage 8A et 8B, les ondes lumineuses dans les guides 4A et 4B sont en phase et ont pour amplitude $2^{-\frac{1}{2}}$ (pour une puissance unité à l'entrée). Pendant leur propagation, les ondes subissent un déphasage dû à l'effet électro-optique. A l'abscisse B (celle des sorties de déphasage 10A et 10B) elles deviennent :

$$a_i(B) = 2^{-\frac{1}{2}}$$
$$b_i(B) = 2^{-\frac{1}{2}} \exp(-j P_i) \qquad i = TE \text{ ou } TM \quad R1$$

l'indice i indique qu'il s'agit des modes TE ou TM, $P_i$ est la différence de phase, entre les ondes, dûe à l'effet électro-optique.

Avec cette orientation du matériau et cette disposition d'électrodes il vient

$$P_{TM} = - P_{TE} \quad R2$$

car

$$P_{TE} = kr_{22}(V/d)$$
$$P_{TM} = kr_{12}(V/d) \quad R3$$

avec $r_{12} = -r_{22}$

k est un facteur qui tient compte de la répartition des champs optique et électrique et de l'indice du matériau. V est la tension appliquée sur les électrodes par le générateur 18 et d est la distance entre électrodes (figure 3).

La matrice de transfert du coupleur directif 20 relie les amplitudes complexes entre les entrées de ce coupleur (abscisses B) et ses sorties 22A et 22B (abscisses C). Pour un coupleur formé de guides identiques et réglés à 3 dB (l'énergie d'une entrée est également répartie entre les deux sorties), la matrice de transfert s'écrit :

$$\begin{vmatrix} a_i(C) \\ b_i(C) \end{vmatrix} = 2^{-\frac{1}{2}} \begin{vmatrix} 1 & -j \\ -j & 1 \end{vmatrix} \begin{vmatrix} a_i(B) \\ b_i(B) \end{vmatrix} \qquad R4$$

Cette expression est classique et peut être trouvée dans l'article de M. KOGELNIK et R.SCHMIDT intitulé "Switched directional couplers with alternating delta β" publié dans IEEE Journal of Quantum Electronics, Vol - QE 12, n°7, July 1976.

Dans cette configuration le coupleur sert de "sélecteur de phase". Pour une différence de phase de 90 degrés des ondes entre ses entrées toute la puissance lumineuse de l'onde d'entrée ressort sur une sortie. Pour une différence de phase de -90 degrés entre ces mêmes entrées, toute cette puissance ressort sur l'autre sortie.

En ajustant la tension V pour que le déphasage soit par exemple $P_{TE} = 90$ degrés (donc avec la relation R2, il vient $P_{TM} = -90$ degrés), les relations R4 et R1 entraînent :

$$|a_{TE}(C)|^2 = 0 \qquad |a_{TM}(C)|^2 = 1$$

$$|b_{TE}(C)|^2 = 1 \qquad |b_{TM}(C)|^2 = 0 \qquad R5$$

Le dispositif se comporte comme un séparateur de polarisations : une vibration polarisée suivant le mode TE ressort, par exemple, en 22B, alors qu'une vibration polarisée suivant le mode TM ressort en 22A.

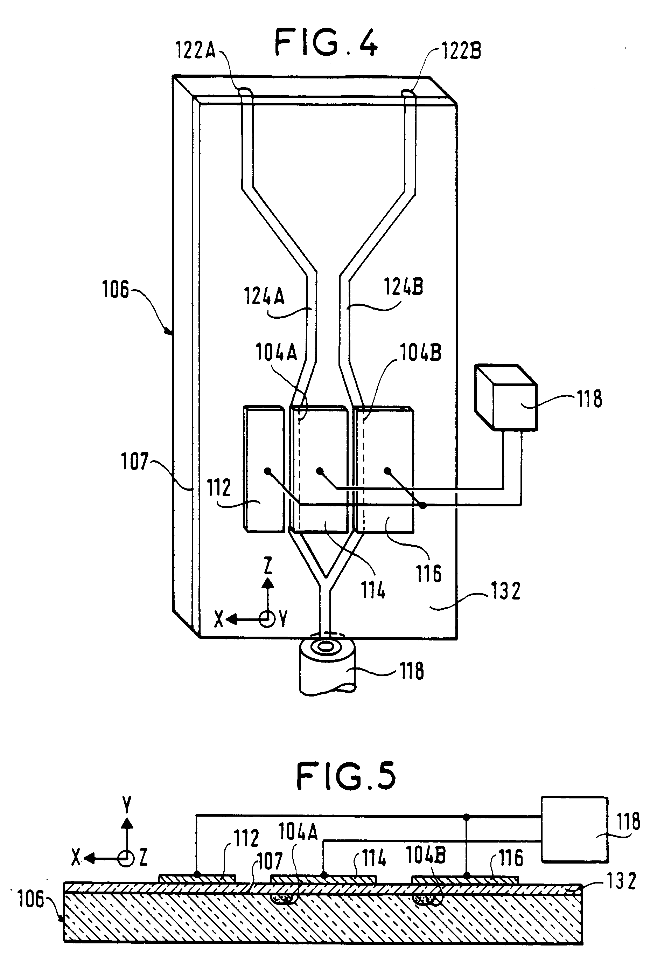

Le deuxième dispositif selon la présente invention représenté aux figures 4 et 5 comporte de manière générale des éléments qui sont analogues à ceux du premier dispositif et qui sont désignés par les mêmes numéros de référence augmentés de 100. Les différences sont les suivantes : La face 107 du substrat 6 portant les guides de lumières 104A, 104B, 124A et 124B est perpendiculaire à l'axe cristallographique Y de ce substrat.

Les bords de deux des électrodes 112, 114 et 116 recouvrent les guides de déphasage 104A et 104B de manière à leur appliquer un champ électrique perpendiculaire à cette face. Une couche tampon optique 132 est interposée entre ces électrodes et ces guides et a été déposée pour cela sur toute cette face.

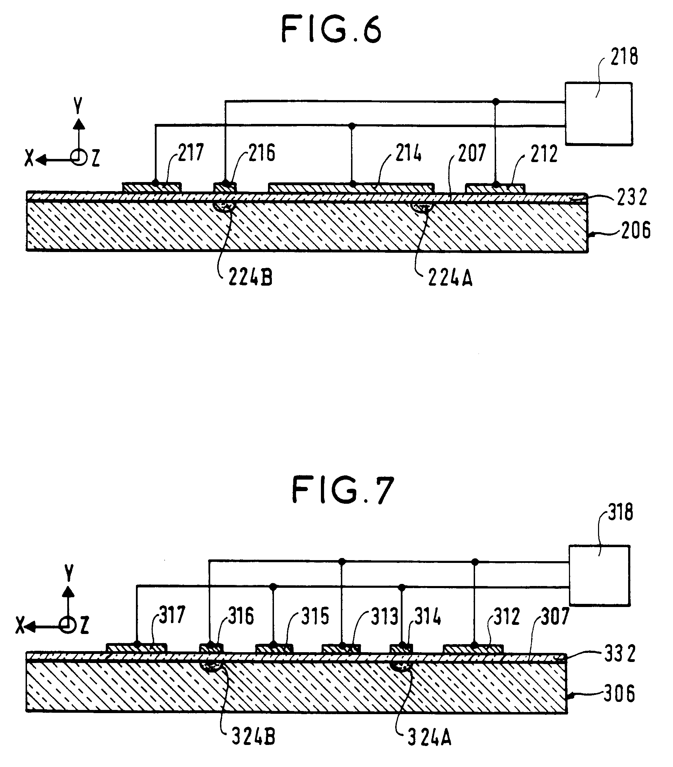

Les troisième et quatrième dispositifs selon l'invention représenté aux figures 6 et 7 comportent des éléments qui sont analogues à ceux du deuxième dispositif décrit ci-dessus et qui sont désignés par des numéros de référence encore augmentés, respectivement, de 100 et de 200 c'est-à-dire supérieurs à 200 et à 300, respectivement. Les différences sont les suivantes :

Dans le troisième dispositif de la figure 6 la verticalité et l'intensité du champ électrique (par rapport à la face 207) ont été améliorées au niveau d'un guide de déphasage 224B surmonté par une électrode 216 grâce à la présence d'une électrode latérale supplémentaire 217 faisant pendant à l'électrode 214.

Dans le quatrième dispositif représenté à la figure 7 la verticalité et l'intensité du champ électrique ont été en outre améliorées au niveau de l'autre guide de déphasage 324A surmonté par l'électrode 314 grâce à la présence d'une électrode latérale supplémentaire 313, une électrode latérale 315 étant alors prévue pour le guide 324B entre l'électrode 316 qui recouvre ce guide et l'électrode 313.


**Revendications**

1.  Dispositif électro-optique à guides de lumière comportant un ensemble de déphasage (2) comportant lui-même une paire de guides (4A, 4B) formés dans un substrat cristallin (6) pour réaliser un déphasage électro-optique de 90 degrés, et suivi d'un coupleur (20) à demi-puissances, ce dispositif étant caractérisé par le fait que ladite paire de guides est constituée de guides (4A, 4B) qui sont parallèles à l'axe optique unique (Z) de ce substrat (6) de manière que deux vibrations lumineuses de polarisations perpendiculaires voient deux coefficients électro-optiques de même valeur absolue et de signes algébriques opposés.

2.  Dispositif selon la revendication 1, caractérisé par le fait qu'il comporte
    - ladite paire de guides comprenant un premier (4A) et un deuxième (4B) guides de déphasage qui sont deux guides de lumière formés dans ledit substrat cristallin (6) présentant trois axes cristallographiques (X, Y, Z) et ledit axe optique unique (Z) et donnant lieu à des interactions caractérisées par des coefficients électro-optiques dépendant de la direction d'un champ électrique appliqué et de la direction de polarisation d'une lumière dans ce substrat, ces guides présentant une première (8A) et une deuxième (8B) entrées de déphasage pour recevoir deux vibrations lumineuses qui présentent des polarisations selon un même mode transversal électrique ou transversal magnétique et des fréquences, amplitudes et phases égales, de sorte que ces deux vibrations constituent une première et une deuxième moitiés d'une même vibration polarisée, ces guides s'étendant parallèlement l'un à l'autre sur une même longueur pour guider ces première et deuxième moitiés de vibration jusqu'à une première (10A) et une deuxième (10B) sorties de déphasage, respectivement,
    - des électrodes (12, 14, 16) pour recevoir une tension de commande et appliquer en réponse aux deux dits guides de déphasage (4A, 4B) deux champs électriques d'interaction qui sont parallèles à un même axe d'interaction électro-optique (Y) perpendiculaire à ces guides et qui sont orientés dans deux sens opposés,
    - et un générateur électrique (18) pour fournir ladite tension de commande, la valeur de cette tension étant choisie, compte tenu de la longueur desdits guides de déphasage et des coefficients électro-optiques dudit substrat pour la direction de polarisation de ladite vibration polarisée et pour ladite direction d'interaction, de manière à provoquer ledit déphasage électro-optique de 90 degrés entre lesdites première et deuxième moitiés de vibrations sur lesdites première (10A) et deuxième (10B) sortie de déphasage, respectivement ,
    - ledit coupleur à demi-puissances (20) étant symétrique et indépendant de la polarisation et comportant lui même :
    - une première et une deuxième entrées de couplage (10A, 10B) raccordées respectivement aux dites premières et deuxièmes sorties de déphasage,
    - une première (22A) et une deuxième (22B) sorties de coupleur,
    - et des guides de lumière (24A, 24B) reliant les deux dites entrées (10A, 10B) aux deux dites sorties (22A, 22B) de coupleur et mutuellement couplés de manière à faire interférer sur chacune de ces deux sorties de coupleur, à demi-puissances, les lumières reçues sur lesdites première et deuxième entrées de coupleur en affectant d'une part, sur cette première sortie de coupleur (22A), la lumière provenant de cette deuxième entrée (10B) d'un déphasage de couplage de 90 degrés par rapport à celle provenant de cette première entrée (10A) et en affectant d'autre part, sur cette deuxième sortie de coupleur (22B), la lumière provenant de cette première entrée (10A), du même dit déphasage de couplage par rapport à celle provenant de cette deuxième entrée (10B) grâce à quoi lesdits déphasages électro-optique et de couplage se compensent et les deux dites moitiés de vibration se présentent en accord de phase pour s'additionner sur l'une de ces sorties de coupleur (22A) de sorte que cette sortie constitue une sortie ouverte dudit dispositif pour ladite vibration polarisée, ces mêmes déphasages s'additionnant et les deux dites moitiés de vibration se présentant en opposition de phase pour s'annihiler mutuellement sur l'autre de ces sorties de coupleur (22B) de sorte que cette autre sortie constitue une sortie fermée dudit dispositif pour cette même vibration polarisée, ladite direction d'interaction (Y) étant perpendiculaire à cet axe optique et telle que les coefficients électro-optiques ($r_{22}$, $r_{12}$) de ce substrat pour des polarisations de lumière parallèle et perpendiculaire à cet axe d'interaction soient égaux en valeur absolue et opposés en signe algébrique.

3. Dispositif selon la revendication 2, dans lequel lesdits guides de déphasage (4A, 4B) et ledit coupleur (20) sont formés dans une même face (7) dudit substrat cristallin (6) qui est parallèle audit axe optique (Z) et à un autre axe cristallographique (Y) de ce substrat, ledit axe d'interaction (Y) étant lui aussi parallèle à un axe cristallographique de ce substrat.

4. Dispositif selon la revendication 3, comportant en outre une jonction de guides en Y (24) formée dans ladite face (7) dudit substrat cristallin (6) pour raccorder une entrée (26) dudit dispositif aux deux dites entrées de déphasage (8A, 8B) et pour diviser une onde d'entrée qui est reçue sur cette entrée de dispositif en deux moitiés d'ondes de mêmes puissances qui sont reçues respectivement sur ces deux entrées de déphasage.

5. Dispositif selon la revendication 4, caractérisé par le fait que ledit générateur électrique (18) fournit une tension de commande constante pour que ce dispositif dirige ladite vibration se propageant selon un mode transversal électrique vers l'une desdites sortie de ce dispositif (22B) et ladite vibration se propageant selon un mode transversal magnétique vers l'autre dite sortie de ce dispositif (22A), de manière que ce dispositif constitue un séparateur de polarisations.


**Patentansprüche**

1. Elektrooptische Vorrichtung mit Lichtleitern, die eine Phasenverschiebungsanordnung (2) aufweist, welche ihrerseits ein Paar von Lichtleitern (4A, 4B) aufweist, die in einem kristallinen Substrat (6) ausgebildet sind, um eine elektrooptische Phasenverschiebung um 90° zu bewirken, und auf die ein Koppler (20) der halben Leistung folgt, dadurch gekennzeichnet, daß das Lichtleiterpaar aus Lichtleitern (4A, 4B) besteht, die parallel zur gemeinsamen optischen Achse Z des Substrats (6) verlaufen, derart, daß zwei Lichtschwingungen mit zueinander senkrechten Polarisationen zwei elektrooptische Koeffizienten mit dem gleichen Absolutwert und entgegengesetzten Vorzeichen sehen.

2. Vorrichtung nach Anspruch 1, dadurch gekennzeichnet, daß sie aufweist:
   - das Lichtleiterpaar, das einen ersten (4A) und zweiten (4B) Lichtleiter zur Phasenverschiebung enthält, bei denen es sich um zwei Lichtleiter handelt, die in dem kristallinen Substrat (6) ausgebildet sind, das drei kristallographische Achsen (X,Y,Z) und die genannte gemeinsame optische Achse (Z) aufweist und das Wechselwirkungen auslöst, die durch elektrooptische Koeffizienten gekennzeichnet sind, welche von der Richtung eines angelegten elektrischen Feldes und der Polarisationsrichtung eines Lichtes in dem Substrat abhängen, wobei die Lichtleiter einen ersten (8A) und einen zweiten (8B) Phasenverschiebungseingang zum Empfangen zweier Lichtschwingungen aufweisen, die Polarisationen gemäß einem gleichen elektrischen oder magnetischen Transversalmodus und mit gleichen Frequenzen, Amplituden und Phasen besitzen, derart, daß diese beiden Schwingungen eine erste und eine zweite Hälfte einer gleichen polarisierten Schwingung bilden, wobei die Lichtleiter sich parallel zueinander und über eine gleiche Länge erstrecken, um die erste und die zweite Hälfte der Schwingung bis zu einem ersten (10A) bzw. einem zweiten (10B) Phasenverschiebungsausgang zu leiten;
   - Elektroden (12, 14, 16) zum Empfangen einer Steuerspannung, und zum Anlegen zweier elektrischer Wechselwirkungsfelder, die parallel zu einer gemeinsamen, senkrecht zu den Lichtleitern gerichteten elektrooptischen Wechselwirkungsachse (Y) verlaufen, und die einander entgegengesetzt gerichtet sind;
     - und einen elektrischen Generator (18) zum Liefern der Steuerspannung, wobei der Wert dieser Spannung unter Berücksichtigung der Länge der Phasenverschiebungslichtleiter und der elektrooptischen Koeffizienten des Substrats für die Polarisationsrichtung der polarisierten Schwingung und für die Wechselwirkungsrichtung gewählt sind, derart, daß die elektrooptische Phasenverschiebung um 90° zwischen der ersten und der zweiten Hälfte der Schwingung am ersten (10A) bzw. am zweiten Phasenverschiebungsausgang (10B) verursacht wird;
     - wobei der Koppler (20) mit halber Leistung symmetrisch und unabhängig von der Polarisation ist und selber aufweist:

- einen ersten und einen zweiten Kopplungseingang (10A, 10B), die an den ersten bzw. zweiten Phasenverschiebungsausgang angeschlossen sind;
- einen ersten (22A) und einen zweiten Kopplerausgang (22B); und
- Lichtleiter (24A, 24B), die die beiden Eingänge (10A, 10B) mit den beiden Ausgängen (22A, 22B) des Kopplers verbinden und wechselseitig gekoppelt sind, derart, daß sie an jedem der beiden Ausgänge des Kopplers mit halber Leistung das am ersten Kopplereingang und das am zweiten Kopplereingang empfangene Licht wechselseitig interferieren lassen, indem einerseits am ersten Kopplerausgang (22A) das vom zweiten Eingang (10B) kommende Licht einer Koppelphasenverschiebung um 90° relativ zu demjenigen Licht unterworfen wird, das vom ersten Eingang (10A) herkommt, und indem andererseits am zweiten Kopplerausgang (22B) das vom ersten Eingang (10A) kommende Licht der gleichen Koppelphasenverschiebung relativ zu demjenigen Licht unterworfen wird, das vom zweiten Eingang (10B) herkommt, wodurch sich die elektrooptischen Phasenverschiebungen und die Kopplungsphasenverschiebungen kompensieren, und die beiden Hälften der Schwingung phasengleich auftreten, um sich an einem der Kopplerausgänge (22A) zu addieren, derart, daß dieser Ausgang einen offenen Ausgang der Vorrichtung für die polarisierte Schwingung bildet, während sich die gleichen Phasenverschiebungen addieren und die beiden Hälften der Schwingung gegenphasig auftreten, um sich am anderen der Kopplerausgänge (22B) gegenseitig aufzuheben, derart, daß der andere Ausgang einen geschlossenen Ausgang der Vorrichtung für die gleiche polarisierte Schwingung bildet;
- wobei die Wechselwirkungsrichtung (Y) senkrecht zu der optischen Achse gerichtet und so beschaffen ist, daß die elektrooptischen Koeffizienten ($r_{22}$, $r_{12}$) des Substrats für die eine Polarisation, die parallel bzw. senkrecht zur Wechselwirkungsachse verläuft, einen gleich großen Absolutwert und entgegengesetzte algebraische Vorzeichen aufweisen.

3. Vorrichtung nach Anspruch 2, bei der die Phasenverschiebungslichtleiter (4A, 4B) und der Koppler (20) in einer gemeinsam Seite (7) des kristallinen Substrats (6) ausgebildet sind, welche parallel zur optischen Achse (Z) und zu einer anderen kristallographischen Achse (Y) des Substrats verläuft, wobei die Wechselwirkungsachse (Y) ebenfalls parallel zu einer kristallographischen Achse des Substrats verläuft.

4. Vorrichtung nach Anspruch 3, die weiter einen Y-förmigen Lichtleiterübergang (24) aufweist, der auf der Seite (7) des kristallinen Substrats (6) ausgebildet ist, um einen Eingang (26) der Vorrichtung mit den beiden Phasenverschiebungseingängen (8A, 8B) zu verbinden und um eine Eingangswelle, die an diesem Eingang der Vorrichtung empfangen wird, in zwei Wellenhälften jeweils gleicher Leistung zu teilen, die an je einem der beiden Phasenverschiebungseingänge empfangen werden.

5. Vorrichtung nach Anspruch 4, dadurch gekennzeichnet, daß der elektrische Generator (18) eine konstante Steuerspannung liefert, damit die Vorrichtung die Schwingung, die sich gemäß einem elektrischen Transversalmodus ausbreitet, zu dem einen (22B) der Ausgänge der Vorrichtung leitet, und die Schwingung, die sich gemäß einem magnetischen Transversalmodus ausbreitet, zu dem anderen Ausgang (22A) der Vorrichtung leitet, derart, daß die Vorrichtung einen Polarisationsseparator bildet.

## Claims

1. Optical waveguide electro-optic device including a phase-shifter system (2) itself including a pair of waveguides (4A, 4B) formed in a crystal substrate (6) to effect an electro-optical phase-shift of 90 degrees and followed by a half-power coupler (20), this device being characterised in that said pair of waveguides comprises waveguides (4A, 4B) parallel to the single optical axis (Z) of this substrate (6) so that two luminous vibrations with perpendicular polarisations see two electro-optical coefficients with the same absolute value and opposite algebraic signs.

2. Device according to claim 1 characterised in that it comprises:
   - said pair of waveguides comprising first and second phase-shifter waveguides (4A, 4B) which are two optical waveguides formed in said crystal substrate (6) having three crystal axes (X, Y, Z) and said single optical axis (Z) and giving rise to interaction characterised by electro-optical coefficients dependent on the direction of an applied electric field and on the polarisation direction of light in this substrate, these waveguides having first and second phase-shifter inputs (8A, 8B) for receiving two luminous vibrations which have polarisations with the same transverse electric or transverse magnetic mode and equal frequencies, amplitudes and phases, so these two vibrations constitute first and second halves of the same polarised vibration, these waveguides extending parallel to each other over the same length to guide these first and second vibration halves to respective first and second phase-shifter outputs (10A, 10B),

- electrodes (12, 14, 16) for receiving a control voltage and applying in response to said two phase-shifter waveguides (4A, 4B) two interacting electric fields parallel to the same electro-optical interaction axis (Y) perpendicular to these waveguides and oriented in two opposite directions,

- and an electric generator (18) for supplying said control voltage, the value of this voltage being chosen, allowing for the length of said phase-shifter waveguides and for the electro-optic coefficients of said substrate for the direction of polarisation of said polarised vibration and for said interaction direction, to cause said 90 degrees electro-optical phase-shift between said first and second vibration halves at said first and second phase-shifter outputs (10A, 10B), respectively,

- said half-power coupler (20) being symmetrical and independent of the polarisation and itself including:

- first and second coupler inputs (10A, 10B) respectively connected to said first and second phase-shifter outputs,

- first and second coupler outputs (22A, 22B),

- and optical waveguides (24A, 24B) connecting said two inputs (10A, 10B) with said two coupler outputs (22A, 22B) and coupled to each other to cause interference at each of the two outputs of the half-power coupler between the light received at said first and second inputs of the coupler by applying at said first coupler output (22A) to the light from this second input (10B) a coupler phase-shift of 90 degrees relative to that from this first input (10A) and assigning at the second output of the coupler (22B) to the light from this first input (10A) the same coupler phase-shift relative to that from this second input (10B) whereby said electro-optic phase-shifts and coupler phase-shifts compensate each other and said two vibration halves are present in phase to combine at one of said coupler outputs (22A) whereby this output constitutes an open output of said device for said polarised migration, these same phase-shifts combining and said two vibration halves being present 180° out of phase to cancel out completely at the other coupler output (22B) whereby this other output constitutes a closed output of said device for the same polarised vibration, said interaction direction (Y) being perpendicular to this optical axis and such that the electro-optical coefficients ($R_{22}$, $R_{12}$) of this substrate for light polarisations parallel to and perpendicular to this interaction axis are equal in absolute value and opposite in algebraic sign.

3. Device according to claim 2 wherein said phase-shifter waveguides (4A, 4B) and said coupler (20) are formed in a first side (7) of said crystal substrate (6) which is parallel to said optical axis (Z) and to another crystal axis (Y) of this substrate, said interaction axis (Y) being also parallel to a crystal axis of the substrate.

4. Device according to claim 3 further including a Y waveguide junction (24) formed in said face (7) of said crystalised substrate (6) to connect an input (26) of said device to said two phase-shifter inputs (8A, 8B) and for dividing an input wave received at this input of the device into two equal-power wave halves which are respectively received at these two phase-shifter inputs.

5. Device according to claim 4 characterised in that said electric generator (18) supplies a constant control voltage so that this device directs said vibration propagating with a transverse electric mode to one of said outputs of said device (22B) and said vibration propagating with a transverse magnetic mode to the other of said outputs of this device (22A) whereby the device constitutes a polarisation splitter.

# FIG.1

# FIG.2

# FIG.3

# FIG.4

# FIG.5

# FIG.6

# FIG.7